# EUROPÄISCHE PATENTANMELDUNG

(11) **EP 2 426 458 A1**
(43) Veröffentlichungstag der Anmeldung: **07.03.2012**
(21) Anmeldenummer: 11176561.6
(22) Anmeldetag: 04.08.2011
(51) Int. Cl.: G01B 21/04

(54) **Messvorrichtung zum Vermessen eines Werkstücks**

(30) Priorität: 01.09.2010 DE 202010012063 U
(71) Anmelder: Eiblmeier, Hermann, 94431 Grossköllnbach (DE)
(72) Erfinder: Eiblmeier, Hermann, 94431 Grossköllnbach (DE)
(74) Vertreter: Schurack, Eduard F.

(57) **Zusammenfassung**

Die vorliegende Erfindung betrifft eine Messvorrichtung (10) zum Vermessen eines Werkstücks mit einem Achsensystem (38) mit mindestens einem beweglich gelagerten Arm (40); einer Scanvorrichtung (42), die an dem beweglich gelagerten Arm (40) des Achsensystems (38) angeordnet ist; und einer Lagerungsvorrichtung (44) zum Lagern des Werkstücks, wobei die Messvorrichtung (10) weiterhin ein Gehäuse (30, 48, 50) umfasst, in dem zumindest der Arm (40) des Achsensystems (38), die Scanvorrichtung (42) sowie die Lagerungsvorrichtung (44) angeordnet sind.

## Beschreibung

Die vorliegende Erfindung betrifft eine Messvorrichtung zum Vermessen eines Werkstücks mit einem Achsensystem mit mindestens einem beweglich gelagerten Arm, einer Scan-Vorrichtung, die an dem beweglich gelagerten Arm des Achsensystems angeordnet ist, und einer Lagerungsvorrichtung zum Lagern des Werkstücks.

Derartige Messvorrichtungen sind im Stand der Technik hinlänglich bekannt und werden beispielsweise im Automobilbau im Rahmen der Qualitätssicherung verwendet, um an ausgewählten Mustern die Einhaltung vorgegebener Maße zu überprüfen. Das Achsensystem kann als System mit Linearachsen, Gelenkachsen und/oder rotierenden Achsen ausgeführt sein. Dabei werden im Stand der Technik das Achsensystem und die Lagerungsvorrichtung am Hallenboden einer Werkhalle fixiert, beispielsweise mittels Schrauben im Betonboden, oder mit mit dem Betonboden fest verbundenen Metallschienen verschraubt. Bei dieser bekannten Vorgehensweise ergibt sich der Nachteil, dass es immer wieder zu nicht reproduzierbaren Messergebnissen kommt.

Die Aufgabe der vorliegenden Erfindung besteht deshalb darin, eine eingangs genannte Messvorrichtung derart weiterzubilden, dass die Zuverlässigkeit der aufgenommenen Messwerte erhöht ist.

Diese Aufgabe wird gelöst durch eine Messvorrichtung mit den Merkmalen von Anspruch 1.

Der vorliegenden Erfindung liegt die Erkenntnis zugrunde, dass es im Stand der Technik deshalb häufig zu nicht reproduzierbaren Messwerten kommt, da die Messbedingungen bei der Vorgehensweise nach dem Stand der Technik variieren können. Besonders deutlich wird dieser Umstand, wenn man sich verdeutlicht, dass bereits Abweichungen im Mikrometer-Bereich darüber entscheiden können, ob das Werkstück für in Ordnung befunden werden kann oder als Ausschuss zu werten ist.

Je nachdem, ob im übrigen Bereich der Werkhalle Arbeiten ablaufen, die die Temperatur im Bereich der Messvorrichtung beeinflussen, kommt es zu unterschiedlichen Messergebnissen. Wie sich gezeigt hat, ergeben sich ebenfalls unterschiedliche Messergebnisse, je nachdem, ob die Messung an einem Sommernachmittag oder an einem Wintertag durchgeführt wird. Derartige Schwankungen der Temperatur lassen sich bei der Vorgehensweise nach dem Stand der Technik nicht eliminieren und beeinträchtigen damit den Aussagewert der erzielten Messergebnisse. Weitere Schwankungen ergeben sich in Abhängigkeit der Luftfeuchtigkeit in der Werkhalle, die ebenfalls von anderen in der Werkhalle ablaufenden Prozessen beeinflusst werden kann.

Auf der Basis dieser Erkenntnisse umfasst deshalb eine erfindungsgemäße Messvorrichtung weiterhin ein Gehäuse, in dem zumindest der Arm des Achsensystems, die Scan-Vorrichtung sowie die Lagerungsvorrichtung angeordnet sind. Dadurch, dass die Messung nunmehr in einem Gehäuse stattfindet, können reproduzierbare Messbedingungen geschaffen werden. Die mit einer erfindungsgemäßen Messvorrichtung erzielten Messwerte zeichnen sich daher durch eine hohe Reproduzierbarkeit, eine hohe Zuverlässigkeit und damit verbunden durch einen hohen Aussagewert aus.

Besonders bevorzugt ist das Gehäuse derart ausgebildet, dass es zumindest den Arm des Achsensystems, die Scan-Vorrichtung sowie die Lagerungsvorrichtung vollständig umschließt. Wenngleich ein Gehäuse, das beispielsweise massive Seitenteile in einigen, jedoch nicht allen, Raumrichtungen aufweist, bereits die Möglichkeit eröffnet, bestimmte thermische Strahlungsquellen abzuschirmen, so ergeben sich bei der genannten bevorzugten Ausführungsform noch weitere Verbesserungen.

Besonders bevorzugt umfasst die Messvorrichtung weiterhin eine Klimatisiervorrichtung, um den Innenraum des Gehäuses zu klimatisieren. Durch diese Weiterbildung können besonders konstante Messbedingungen, insbesondere hinsichtlich Temperatur und Luftfeuchtigkeit, geschaffen werden. Der Aussagegehalt der erzielten Messwerte wird dadurch weiter erhöht.

Besonders bevorzugt umfasst das Gehäuse mindestens eine Sichtscheibe, wobei die Sichtscheibe gemäß einem vorgebbaren Abdunklungsgrad abgedunkelt ist. Durch diese Maßnahme kann einerseits sichergestellt werden, dass die Messung von außen, ohne Beeinträchtigung der Messbedingungen in dem Gehäuse, unter Sicht kalibriert werden kann, andererseits der Lichteinfall einen optischen Scan-Vorgang durch Streulicht nicht negativ beeinflusst. Der Abdunklungsgrad kann dabei so hoch gewählt werden, dass einerseits die Abläufe in der Messvorrichtung noch beobachtet werden können, andererseits die Beeinträchtigung durch Lichteinfall zuverlässig ausgeschlossen wird.

Besonders vorteilhaft umfasst das Gehäuse eine Transportvorrichtung zum Transportieren des Gehäuses einschließlich zumindest des Achsensystems, der Scan-Vorrichtung sowie der Lagerungsvorrichtung. Durch diese Maßnahme lässt sich ein weiterer bedeutender Nachteil der bekannten Messvorrichtung beseitigen: Bei der aus dem Stand der Technik bekannten Messvorrichtung ist, wie bereits erwähnt, die Messvorrichtung mit dem Hallenboden fest verbunden. Bei bestimmten Bauteilen ist eine Überprüfung der Maße im Rahmen der Qualitätssicherung nur in größeren zeitlichen Abständen nötig, beispielsweise beim Anlauf einer Produktionsanlage. Werden in unterschiedlichen Werkhallen unterschiedliche Produkte produziert, so ist in jeder Werkhalle eine bekannte Messvorrichtung zu installieren. Damit fallen die entsprechenden Kosten für zumindest das Achsensystem, die Scan-Vorrichtung und die Lagerungsvorrichtung mehrfach an. Insbesondere ist in der entsprechenden Werkhalle eine entsprechende Grundfläche dauerhaft durch eine derartige Messvorrichtung belegt.

Eine Messvorrichtung nach dieser bevorzugten Ausführungsform der vorliegenden Erfindung stellt hingegen die Möglichkeit bereit, lediglich eine Messvorrichtung - oder zumindest eine reduzierte Anzahl von Messvorrichtungen - vorzusehen, die dann nach Bedarf in die jeweilige Werkhalle oder innerhalb der jeweiligen Werkhalle zur entsprechenden Produktionsanlage transportiert werden kann und nach Abschluss der Messungen wieder entfernt werden kann. Dadurch ergibt sich einerseits, dass kostenintensive Komponenten wie das Achsensystem, die Scan-Vorrichtung und die Lagerungsvorrichtung nur in reduzierter Anzahl vorgesehen werden brauchen, zum anderen der für eine derartige Messvorrichtung benötigte Platz nur während der Durchführung einer Messung bereitzustellen ist. Insbesondere kleineren Firmen wird dadurch die Möglichkeit eröffnet, derart kostenintensive Vorrichtungen lediglich für die Dauer der Durchführung von Messungen zu mieten. Hierdurch wird kleineren Firmen überdies die Möglichkeit bereitgestellt, überhaupt erst eine derartig hochwertige Qualitätskontrolle einzuführen, die bisher bei kleineren Firmen aufgrund der damit verbundenen hohen Kosten häufig entfallen ist.

Besonders bevorzugt weist eine erfindungsgemäße Messvorrichtung ein Gehäuse auf, das einen Grundtragrahmen umfasst, wobei die Transportvorrichtung mit dem Grundtragrahmen des Gehäuses gekoppelte Staplerschuhe umfasst. Auf diese Weise wird die Möglichkeit eröffnet, ohnehin in einem produzierenden Betrieb vorhandene Stapler dazu zu nutzen, die Transportvorrichtung innerhalb des Werksgeländes zu transportieren oder, beispielsweise im oben genannten Fall der Vermietung, von einer Ladefläche eines LKW zum Zwecke der Durchführung der Messungen abzuladen und anschließend wieder zu verladen. Die Kopplung der Staplerschuhe mit dem Grundtragrahmen ist auch deshalb bevorzugt, da der Grundtragrahmen ohnehin sehr stabil auszuführen ist, um die oben erwähnten Elemente einer erfindungsgemäßen Messvorrichtung zu tragen und im Hinblick auf genaue Messungen fix relativ zueinander zu lagern. Der zusätzliche Materialaufwand zur Herstellung der Transportierfähigkeit einer erfindungsgemäßen Messvorrichtung hält sich daher im überschaubaren Rahmen.

Bevorzugt umfasst das Gehäuse ein Deckenteil, mehrere, insbesondere vier, Seitenteile sowie ein Bodenteil. Um auch die Vermessung größerer Werkstücke zu ermöglichen und dennoch die Transportierfähigkeit einer erfindungsgemäßen Messvorrichtung sicherzustellen, kann insbesondere das Deckenteil und/oder das Bodenteil mehrteilig ausgebildet sein. Bei einer bevorzugten Ausführungsform kann das Gehäuse zum Zwecke des Transports in zwei etwa gleich große Hälften zerlegt werden. Dadurch ist ein Transport einer erfindungsgemäßen Messvorrichtung auch mit kleineren LKWs bzw. Staplern mit geringerer Tragkraft ermöglicht.

Für eine besonders einfache Zugänglichkeit umfasst mindestens ein Seitenteil mindestens eine verschließbare Öffnung, insbesondere eine Tür. Dadurch können auch schwere Werkstücke und Werkstücke mit großen Abmessungen problemlos in der Messvorrichtung auf der Lagervorrichtung abgelegt werden.

Gemäß einer bevorzugten Weiterbildung umfasst die Messvorrichtung weiterhin eine Vorrichtung zur Schwingungsdämpfung des Gehäuses. Diese Weiterbildung trägt dem Umstand Rechnung, dass bei den bekannten, an einem Hallenboden montierten Messvorrichtungen die Messergebnisse häufig durch Schwingungen beeinträchtigt sind, die beispielsweise durch nebenan laufende Produktionsanlagen verursacht und in den Hallenboden eingeleitet werden. Für besonders zuverlässige Messungen müssen daher im Stand der Technik die Produktionsanlagen ausgeschaltet werden, wodurch sich ein Produktionsausfall ergibt. Durch eine Schwingungsdämpfung des Gehäuses können schwingungserzeugende, mit dem Hallenboden gekoppelte Anlagen auch während der Durchführung von Messungen in Betrieb bleiben. Dennoch ergeben sich Messergebnisse von hoher Aussagekraft.

Die Vorrichtung zur Schwingungsdämpfung kann für eine aktive und/oder eine passive Schwingungsdämpfung ausgelegt sein. In diesem Zusammenhang kann die Vorrichtung zur Schwingungsdämpfung beispielsweise mindestens ein Gummielement umfassen. Dadurch kann das Gehäuse beispielsweise über das Bodenteil des Gehäuses gegenüber dem Hallenboden schwingungsfrei gelagert werden.

In einer besonders vorteilhaften Fortbildung umfasst die Messeinrichtung weiterhin eine Pneumatikvorrichtung, die mit dem mindestens einen Gummielement gekoppelt ist. Auf diese Weise lässt sich eine erfindungsgemäße Messvorrichtung besonders zuverlässig von Schwingungen des Bodens entkoppeln, auf dem eine erfindungsgemäße Messvorrichtung aufgestellt ist. Insbesondere kann die Pneumatikvorrichtung beispielsweise in Abhängigkeit der Signale eines Schwingungsaufnehmers angesteuert werden, um Schwingungen von einer erfindungsgemäßen Messvorrichtung durch aktive Schwingungsdämpfung fernzuhalten.

Die Vorrichtung zur Schwingungsdämpfung kann weiterhin mindestens einen hydraulischen Stoßdämpfer umfassen. Für eine derartige Vorrichtung gelten die obigen Ausführungen mit Bezug auf ein Gummielement entsprechend.

Eine erfindungsgemäße Messvorrichtung kann mindestens ein Trittgitter umfassen, das in dem Gehäuse angeordnet ist. Dadurch wird die Zugänglichkeit des Innenraums des Gehäuses zum Einbringen des Werkstücks, zur Kalibrierung der Messvorrichtung oder Wartung der Elemente der erfindungsgemäßen Messvorrichtung ermöglicht.

Das Innenvolumen des Gehäuses beträgt bevorzugt zwischen 10 m³ und 18 m³.

Besonders bevorzugt ist die Lagerungsvorrichtung zum Drehen des Werkstücks ausgebildet und umfasst insbesondere einen Drehteller.

Das Achsensystem kann System mit Linearachsen, Gelenkachsen und/oder Drehachsen, insbesondere als Robotervorrichtung, ausgebildet sein

Weitere bevorzugte Ausführungsformen ergeben sich aus den Unteransprüchen.

Im Nachfolgenden wird ein Ausführungsbeispiel einer erfindungsgemäßen Messvorrichtung unter Bezugnahme auf die beigefügten Zeichnungen näher beschrieben. Es zeigen:
- Fig. 1: in schematischer Darstellung eine perspektivische Ansicht einer erfindungsgemäßen Messvorrichtung von vorne mit geschlossener Schaltschranktür;
- Fig. 2: eine detailliertere Darstellung der Ansicht von Fig. 1 mit geöffneter Schaltschranktür; und
- Fig. 3: in schematischer Darstellung eine perspektivische Ansicht einer erfindungsgemäßen Messvorrichtung von hinten mit geöffneten Türen und entfernten Trittgittern.

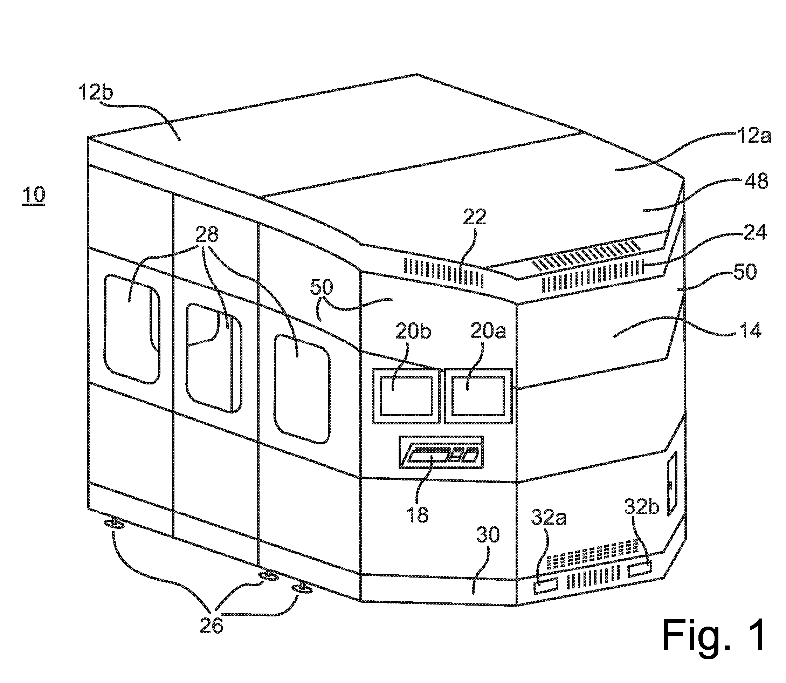

Fig. 1 zeigt in schematischer Darstellung eine perspektivische Ansicht einer erfindungsgemäßen Messvorrichtung (10) von vorne. Diese ist zweiteilig ausgebildet und umfasst einen Vorderteil 12a und einen Hinterteil 12b. Die beiden Teile 12a, 12b können zum Zwecke des Transports voneinander gelöst werden.

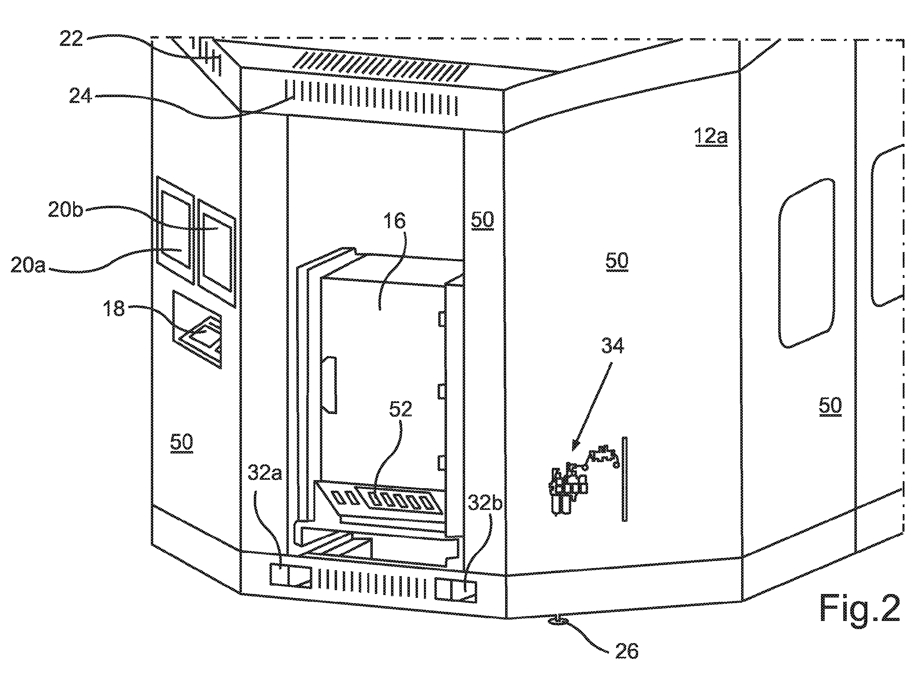

Eine Schaltschranktür 14 dient dazu, einen Schaltschrank 16 (siehe Fig. 2) einerseits zugänglich zu machen, andererseits vor Umgebungseinflüssen wie Staub, Hitze und dergleichen zu schützen. Ein Bedienpult 18 ermöglicht die Programmierung eines Messvorgangs oder einer Serie von Messvorgängen. Dazu sind über dem Bedienpult 18 zwei Sichtfenster 20a, 20b angeordnet. Luftschlitze 22 im Deckenteil mit direktem Zugang zur eigentlichen Messzelle, d.h. dem Innenraum der Messvorrichtung 10, ermöglichen den Austritt von Luft in dem Fall, dass die Messvorrichtung 10 mit einer Klimatisiervorrichtung versehen ist. Die Klimatisiervorrichtung kann auch zur Kühlung des Schaltschranks 16 verwendet werden, wobei zu diesem Zweck Luftschlitze 24 im Schaltschrankbereich vorgesehen sind. Die Messvorrichtung 10 ist auf Gummielementen 26 gelagert, die der Schwingungsdämpfung der Messvorrichtung 10 dienen. Weitere Sichtfenster 28 der Messvorrichtung sind ebenso wie die Sichtfenster 20a, 20b abdunkelbar ausgebildet.

Mit Bezug auf Fig. 2, die eine detailliertere Darstellung von Fig. 1 bietet, sind Staplerschuhe 32a, 32b zu erkennen, die einen Transport des Vorderteils 12a ermöglichen. Die Staplerschuhe 32a, 32b sind im Bodenteil 30 der Messvorrichtung 10 vorgesehen und mit dem Grundtragrahmen des Gehäuses gekoppelt, insbesondere daran angeschweißt. Eine Pneumatikvorrichtung, die insbesondere Anschlüsse an eine Druckluftversorgung umfasst, ist mit 34 bezeichnet.

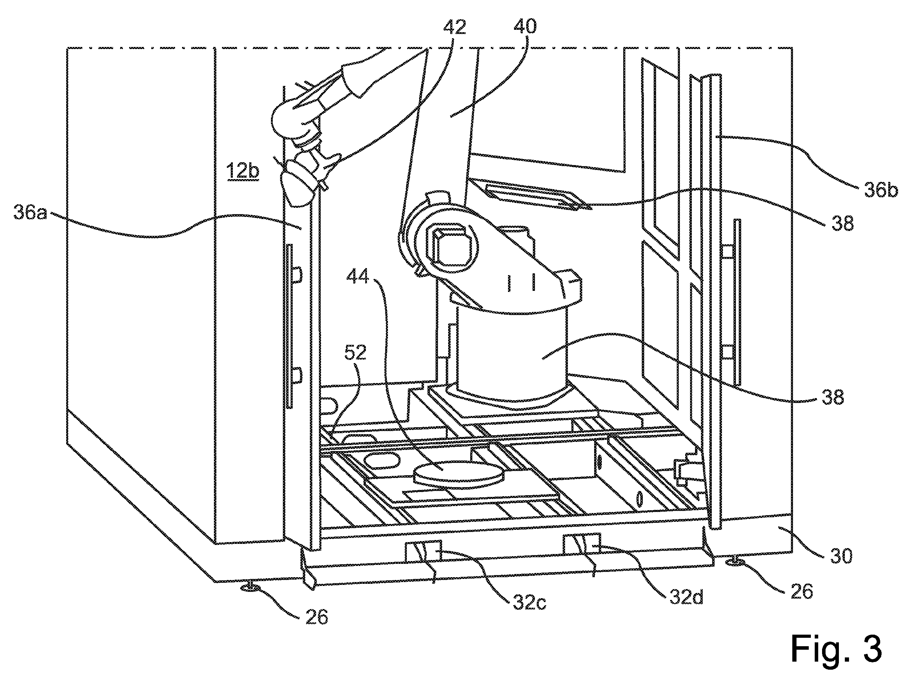

Fig. 3 zeigt eine Ansicht der Messvorrichtung 10 von hinten. Erkennbar sind zwei geöffnete Türen 36a, 36b, die den Zugang zur eigentlichen Messzelle, d.h. dem Innenraum des Gehäuses, ermöglichen. Erkennbar ist ein Achsensystem, das vorliegend als Robotervorrichtung 38 ausgebildet ist, mit einem Arm 40, an dem eine Scan-Vorrichtung 42 montiert ist. Als Lagerungsvorrichtung für das zu vermessende Werkstück dient ein Drehteller 44, der ebenso wie die Robotervorrichtung 38 mit dem Bodenteil 30 der Messvorrichtung 10, insbesondere mit dem Grundtragrahmen 46, fest verbunden ist. In der Darstellung von Fig. 3 sind Trittgitter, die zur Abdeckung des Grundtragrahmens 46 dienen, der Übersichtlichkeit halber entfernt. Wie sich aus Fig. 3 erkennen lässt, weist auch das Hinterteil 12b Staplerschuhe 32c, 32d auf, die einen Transport des Hinterteils 12b ermöglichen.

Das Gehäuse ist vorliegend zweiteilig ausgebildet, wobei jeder Teil ein Deckenteil 48, ein Bodenteil 30 sowie diverse Seitenteile 50 umfasst. Unabhängig von der Teilbarkeit des Gehäuses einer erfindungsgemäßen Messvorrichtung 10 können Staplerschuhe 32 an mehreren, bevorzugt allen Seiten, der Messvorrichtung 10 vorgesehen sein. So kann die Positionierung innerhalb eines vorgebbaren Raums in der gewünschten Orientierung besonders einfach sicher gestellt werden.

Eine Klimatisiervorrichtung 52 ist im Schaltschrank 16 untergebracht. Der Drehteller 44 weist eine Zusatzachse für erhöhtes Messvolumen auf. Die Scan-Vorrichtung 42 und die Robotervorrichtung 38 werden von einer Software angesteuert, die eine selbstständige Kalibrierung in der Messzelle ermöglicht. Zu diesem Zweck umfasst eine erfindungsgemäße Messvorrichtung 10 überdies ein Kalibrierobjekt sowie ein entsprechendes Messprogramm.

## Patentansprüche

1. Messvorrichtung (10) zum Vermessen eines Werkstücks mit
- einem Achsensystem (38) mit mindestens einem beweglich gelagerten Arm (40);
- einer Scanvorrichtung (42), die an dem beweglich gelagerten Arm (40) des Achsensystems (38) angeordnet ist; und
- einer Lagerungsvorrichtung (44) zum Lagern des Werkstücks;
**dadurch gekennzeichnet,**
**dass** die Messvorrichtung (10) weiterhin ein Gehäuse (30, 48, 50) umfasst, in dem zumindest der Arm (40) des Achsensystems (38), die Scanvorrichtung (42) sowie die Lagerungsvorrichtung (44) angeordnet sind.

2. Messvorrichtung (10) nach Anspruch 1,
**dadurch gekennzeichnet,**
**dass** das Gehäuse (30, 48, 50) derart ausgebildet ist, dass es zumindest den Arm (40) des Achsensystems (38), die Scanvorrichtung (42) sowie die Lagerungsvorrichtung (44) vollständig umschließt.

3. Messvorrichtung (10) nach einem der Ansprüche 1 oder 2,
**dadurch gekennzeichnet,**
**dass** sie weiterhin eine Klimatisiervorrichtung (52) umfasst, um den Innenraum des Gehäuses (30, 48, 50) zu klimatisieren.

4. Messvorrichtung (10) nach einem der vorhergehenden Ansprüche,
**dadurch gekennzeichnet,**
**dass** das Gehäuse (30, 48, 50) mindestens eine Sichtscheibe (20a, 20b, 28) umfasst, wobei die Sichtscheibe (20a, 20b, 28) gemäß einem vorgebbaren Abdunklungsgrad abgedunkelt ist.

5. Messvorrichtung (10) nach einem der vorhergehenden Ansprüche,
**dadurch gekennzeichnet,**
**dass** das Gehäuse (30, 48, 50) eine Transportvorrichtung (32a, 32b, 32c, 32d) zum Transportieren des Gehäuses (30, 48, 50) einschließlich zumindest des Achsensystems (38), der Scanvorrichtung (42) sowie der Lagerungsvorrichtung (44) umfasst.

6. Messvorrichtung (10) nach Anspruch 5,
**dadurch gekennzeichnet,**
**dass** das Gehäuse (30, 48, 50) einen Grundtragrahmen (46) aufweist, wobei die Transportvorrichtung (32a, 32b, 32c, 32d) mit dem Grundtragrahmen (46) des Gehäuses (30, 48, 50) gekoppelte Staplerschuhe (32a, 32b, 32c, 32d) umfasst.

7. Messvorrichtung (10) nach einem der vorhergehenden Ansprüche,
**dadurch gekennzeichnet,**
**dass** das Gehäuse (30, 48, 50) ein Deckenteil (48), mehrere, insbesondere vier, Seitenteile (50) sowie ein Bodenteil (30) umfasst.

8. Messvorrichtung (10) nach Anspruch 7,
**dadurch gekennzeichnet,**
**dass** das Deckenteil (48) und/oder das Bodenteil (30) mehrteilig ausgebildet sind/ist.

9. Messvorrichtung (10) nach einem der Ansprüche 7 oder 8,
**dadurch gekennzeichnet,**
**dass** mindestens ein Seitenteil (50) mindestens eine verschließbare Öffnung (36a, 36b), insbesondere eine Tür, aufweist.

10. Messvorrichtung (10) nach einem der vorhergehenden Ansprüche,
**dadurch gekennzeichnet,**
**dass** die Messvorrichtung (10) weiterhin eine Vorrichtung zur Schwingungsdämpfung (26) des Gehäuses umfasst.

11. Messvorrichtung (10) nach Anspruch 10,
**dadurch gekennzeichnet,**
**dass** die Vorrichtung zur Schwingungsdämpfung (26) für eine aktive und/oder passive Schwingungsdämpfung ausgelegt ist.

12. Messvorrichtung (10) nach einem der Ansprüche 10 oder 11,
**dadurch gekennzeichnet,**
**dass** die Vorrichtung zur Schwingungsdämpfung (26) mindestens ein Gummielement umfasst.

13. Messvorrichtung (10) nach Anspruch 12,
**dadurch gekennzeichnet,**
**dass** die Messvorrichtung (10) weiterhin eine Pneumatikvorrichtung (34) umfasst, die mit dem mindestens einen Gummielement gekoppelt ist.

14. Messvorrichtung (10) nach einem der Ansprüche 10 bis 13,
**dadurch gekennzeichnet,**
**dass** die Vorrichtung zur Schwingungsdämpfung (26) mindestens einen hydraulischen Stoßdämpfer umfasst.

15. Messvorrichtung (10) nach einem der vorhergehenden Ansprüche,
**dadurch gekennzeichnet,**
**dass** die Messvorrichtung (10) mindestens ein Trittgitter umfasst, das in dem Gehäuse (30, 48, 50) angeordnet ist.
